# EUROPÄISCHE PATENTSCHRIFT

(11) **EP 0 320 863 B1**
(45) Veröffentlichungstag und Bekanntmachung des Hinweises auf die Patenterteilung: **01.06.1994**
(21) Anmeldenummer: 88120761.7
(22) Anmeldetag: 13.12.1988
(51) Int. Cl.: G11B 5/706, B22F 9/22

(54) **Nadelförmige, im wesentlichen aus Eisen bestehende, ferromagnetische Metallteilchen und Verfahren zu deren Herstellung**
Ferromagnetic metallic acicular particles, mainly iron ones, and process for their production
Particules ferromagnétiques métalliques aciculaires, notamment du fer, et procédé pour sa fabrication

(30) Priorität: 18.12.1987 DE 3743039
(43) Veröffentlichungstag der Anmeldung: 21.06.1989
(73) Patentinhaber: BASF Aktiengesellschaft, 67063 Ludwigshafen (DE)
(72) Erfinder: Mueller, Michael Wolfgang, Dr., D-6831 Plankstadt (DE); Hoppe, Klaus-Dieter, Dr., D-6706 Wachenheim (DE); Schwab, Ekkehard, Dr., D-6730 Neustadt (DE); Steck, Werner, Dr., D-6700 Ludwigshafen (DE); Auweter, Helmut, Dr., D-6703 Limburgerhof (DE); Feser, Rainer, Dr., D-6718 Gruenstadt (DE)

(56) Entgegenhaltungen:
- EP-A- 0 056 257
- DE-A- 3 044 772
- DE-A- 3 603 431

## Beschreibung

Die Erfindung betrifft nadelförmige, im wesentlichen aus Eisen bestehende, ferromagnetische Metallteilchen sowie ein verfahren zu deren Herstellung durch Reduktion formstabilisierend ausgerüsteter nadelförmiger Eisenoxide mittels gasförmiger Reduktionsmittel.

Hochkoerzitive Eisenteilchen für magnetische Aufzeichnungsträger werden u.a. durch Reduktion feinverteilter, nadelförmiger Eisenoxidverbindungen, wie z.B. der Oxide oder Oxidhydroxide, mit Wasserstoff oder anderen gasförmigen Reduktionsmitteln erhalten. Bevorzugt werden Fe(III)-Oxidhydroxide eingesetzt, aus denen durch Temperung und Reduktion sowie anschließende Passivierung die entsprechenden Eisenteilchen hergestellt werden.

Die guten magnetischen Eigenschaften und insbesondere die hohe Koerzitivfeldstärke von nadelförmigen Eisen-Teilchen beruhen trotz des kubischen Kristallgitters im wesentlichen auf der Formanisotropie, d.h. die Nadelform der Teilchen ist ausschlaggebend für die magnetischen Eigenschaften. Um den bei der Umwandlung der nadelförmigen Fe(III)-Oxidhydroxide auftretenden Formverlust so gering wie möglich zu halten und Versinterungen zu vermeiden, werden Eisenoxidhydroxid-Teilchen vor dieser Umwandlung mit einem formstabilisierenden Überzug versehen. Von entscheidender Bedeutung ist jedoch die richtige Einstellung der Geometrie schon während der FeOOH-Synthese.

So kann beispielsweise die Synthese des α-FeOOH nach dem sogenannten sauren Verfahren erfolgen. Hierbei wird von einer wäßrigen Fe(II)-Salzlösung ausgegangen, der gegebenenfalls noch weitere Ionen zugesetzt werden. Durch den Zusatz dieser Fremdionen läßt sich die Geometrie der FeOOH-Teilchen beeinflussen. Zu Beginn der Synthese wird ein Teil der Fe(II)-ionen mit Lauge ausgefällt. Anschließend erfolgt die Oxidation, z.B. durch Einleiten von Luft, zu α-FeOOH. Die dabei freiwerdenden Protonen werden zunächst durch den sich auflösenden Fe(II)-Hydroxid-Niederschlag abgefangen, so daß der pH-Wert nicht unter 5 sinkt. Hat sich dann der Fe(II)-Hydroxid-Niederschlag vollständig aufgelöst, tritt ein starker Abfall des pH-Wertes ein und die Bildung von α-FeOOH kommt praktisch zum Erliegen. Diesen ersten Teil der FeOOH-Synthese bezeichnet man als Keimphase. Die nun noch in Lösung befindlichen Fe(II)-ionen werden anschließend mit Oxidationsmitteln, z.B. Luft, unter gleichzeitiger kontinuierlicher Zugabe von Lauge zu α-FeOOH oxidiert, welches auf den vorhandenen Keimen aufwächst (Wachstumsphase). Nach beendeter Synthese wird das α-FeOOH mit einem formstabilisierenden Überzug versehen. Hierzu wurde bereits die Verwendung von Phosphaten (US-A 4 305 753), Phosphaten und Boraten (DE-A 27 43 298), Phosphaten und Zink (DE-A 36 03 431), Erdalkalimetallverbindungen in Verbindung mit Carbonsäuren (DE-A 24 34 096) oder Zinnverbindungen (DE-C 19 07 691) sowie Verbindungen des Siliciums und/oder Aluminiums (EP-A 56 257, DE-A 30 44 772, US-A 41 33 677) vorgeschlagen. Ebenso ist auch die Entwässerung und/oder Temperung des α-FeOOH beschrieben (u.a. EP-A 24 692, EP-A 24 694, EP-A 56 257, US-A 37 02 270). Die Reduktion der daraus resultierenden Eisenoxidteilchen zum Metall erfolgt üblicherweise mittels gasförmiger Reduktionsmittel, meist Wasserstoff (US-A 2 879 154).

Zur Reduktion dieser oxidischen Materialen sind Temperaturen bis 500°C erforderlich. Diese Temperatur muß zudem noch für einige Stunden aufrechterhalten werden, um eine weitgehend vollständige Überführung des Oxids zum Metall zu bewirken. Dies hat jedoch zur Folge, daß die nadelförmigen Teilchen versintern, so daß die erforderlichen magnetischen Eigenschaften der resultierenden Metallteilchen nicht erreicht werden. Es wurde deshalb bereits vorgeschlagen (DE-A 22 12 933), für Wasserstoffreaktionen katalytisch wirkende Metalle in die Eisenoxidteilchen einzubauen, um auf diese Weise sowohl die Temperatur als auch die Zeitdauer der Reduktion zu vermindern. Vor allem zur Herstellung hochkoerzitiver Metallteilchen, insbesondere Eisenteilchen mit Koerzitivfeldstärken größer 100 kA/m und einer Magnetisierung von mehr als 120 nTm³/g hat es sich als vorteilhaft erwiesen, Nickelverbindungen in die zu reduzierenden Eisenoxidmaterialien einzubauen. Mit der durch den Katalysatoreffekt des Nickels erleichterten und damit besonders schonenden Reduktion ist es möglich die für die angestrebte hohe Aufzeichnungsdichte bei magnetischen Aufzeichnungsträgern nötigen magnetischen Eigenschaften der vorwiegend aus Eisen bestehenden Metallteilchen zu erhalten. Nachteilig an dieser Vorgehensweise ist jedoch, daß Nickel zu den umwelt- und arbeitsplatzbelastenden Stoffen gerechnet wird.

Aufgabe der vorliegenden Erfindung war es daher, nadelförmige, im wesentlichen aus Eisen bestehende ferromagnetische Metallteilchen sowie ein Verfahren zu deren Herstellung bereitzustellen, das die genannten Nachteile nicht besitzt und dennoch die geforderten hohen Werte für Koerzitivfeld-Stärke und Magnetisierung aufweist.

Gegenstand der Erfindung sind somit nadelförmige, im wesentlichen aus Eisen bestehende, ferromagnetische Metallteilchen, welche nicht mehr als 0,4 Gew.% Nickel, bezogen auf die Gesamtmenge der Metallteilchen, enthalten sowie gleichzeitig eine Koerzitivfeldstärke von mehr als 100 kA/m und eine Magnetisierung von größer 120 nTm³/g, gemessen in einem äußeren Magnetfeld von 160 kA/m, aufweisen.

Insbesondere sind Gegenstand der Erfindung nadelförmige, im wesentlichen aus Eisen bestehende, ferromagnetische Metallteilchen mit den genannten Eigenschaften, welche neben Eisen und Sauerstoff noch Zink, Phosphor und Silicium sowie weniger als 0,1 Gew.% Nickel, jeweils bezogen auf die Gesamtmenge der Metallteilchen, aufweisen.

Ein weiterer Gegenstand der Erfindung ist ein Verfahren zur Herstellung der genannten Metallteilchen durch Ausfällen von formstabilisierend ausgerüstetem α-FeOOH, Tempern dieses α-FeOOH bei 500 bis 850°C während 30 bis 300 Minuten und anschließende Reduktion des resultierenden Materials zum Metall mittels gasförmiger Reduktionsmittel bei Temperaturen zwischen 200 und 450°C, wobei das formstabilisierend ausgerüstete α-FeOOH dadurch erhalten wird, daß
(1) aus einer wäßrigen Eisen(II)sulfatlösung durch Zugabe einer wäßrigen Alkalihydroxidlösung und unter Durchleiten von sauerstoffhaltigen Gasen 30 bis 70% der Eisen(II)-ionen als Eisen(III)-oxidhydroxid-Keime ausgefällt,
(2) daran anschließend die restlichen noch in Lösung befindlichen Eisen(II)-ionen unter gleichmäßigem Durchleiten des sauerstoffhaltigen Gases bei einem durch Alkalihydroxidzugabe konstant gehaltenem pH-Wert von 4,0 bis 6,0 und unter Zumischung einer Silikat-haltigen Lösung zur Alkalihydroxidlösung in einer als SiO₂ berechneten Menge von 0,4 bis 1,8 Gew.%, bezogen auf die Menge an resultierendem FeOOH, auf die α-FeOOH-Keime aufgefällt und
(3) danach unter Konstanthalten des pH-Wertes eine weitere Silikathaltige Lösung in einer als SiO₂ berechneten Menge von 0,6 bis 2,6 Gew.%, bezogen auf die Menge an resultierendem FeOOH, zugesetzt wird.

In einer vorteilhaften Ausgestaltung des erfindungsgemäßen Verfahrens wird vor der Zugabe der Silikat-haltigen Lösung gemäß Stufe 3 des Verfahrens der pH-Wert der α-FeOOH-Suspension auf größer 7,0, vorzugsweise 8,0 bis 9,0, eingestellt und nach beendeter Zugabe auf einen pH-Wert kleiner 7,0, vorzugsweise 4 bis 6, abgesenkt.

Bei der Durchführung des erfindungsgemäßen Verfahrens ist es wichtig, daß die eingesetzte Eisen(II)sulfat-Lösung nickelfrei ist, bzw. nur sehr geringe Verunreinigungen an Nickel aufweist, d.h. weniger als 0,1 % Nickel, bezogen auf das Eisensulfat. Dies gilt auch für die weiteren im Verfahren eingesetzten Materialien, insbesondere für die Silikat-haltigen Lösungen, aber auch für gegebenenfalls in bekannter Weise zugesetzte Mengen an Phosphaten und Zinksalzen.

An diese Ausrüstung schließt sich die Entwässerung und dann die Temperung des abfiltrierten, gewaschenen und getrockneten α-FeOOH bei Temperaturen zwischen 500 und 850°C während 30 bis 300 Minuten an. Die bei der Temperung erhaltenen Eisenoxid-Teilchen werden nun mit gasförmigen Reduktionsmitteln, z.B. mit Wasserstoff, bei Temperaturen zwischen 200 und 450°C zum Metall reduziert. Zuletzt wird dieses feinteilige Metallpulver zweckmäßigerweise durch eine kontrollierte Oxidation der Oberfläche passiviert und somit handhabbar.

Die erfindungsgemäßen Metallteilchen weisen die aufgabengemäß geforderten Eigenschaften auf, insbesondere steigt überraschenderweise mit dem Verzicht auf Nickel-Ionen die Sättigungsmagnetisierung stark an. Sie lassen sich in besonders vorteilhafter Weise nach dem Verfahren der Erfindung erhalten. Wegen ihrer günstigen magnetischen Kennwerte eignen sich diese Materialien in hervorragender Weise als magnetisches Material für magnetische Aufzeichnungsträger, insbesondere für alle Informationsspeichermedien, die eine hohe Speicherdichte verlangen. Die Herstellung der Speichermedien geschieht in an sich bekannter Weise. Hierzu wird das Metallpulver zusammen mit den üblichen Zusatzstoffen, d.h. Dispergierhilfsmitteln wie Natrium- oder Zinkoleat, Natriumlaureat, -palmitat, -stearat sowie gegebenenfalls nichtmagnetischen Füllstoffen, wie Quarzmehl, Pulver auf Silicatbasis, Aluminium- oder Zirkonoxid und den in organischen Lösungsmitteln gelösten Bindemitteln, wie z.B. elastomeren Polyurethanen, Epoxidharzen, Vinylchlorid-, Vinylacetat-Copolymeren, mit Isocyanaten vernetzten, OH-Gruppen-haltigen Polyurethanen sowie Mischungen davon, in einer Dispergiereinrichtung, wie einer Topf- oder Rührwerksmühle, zu einer Dispersion verarbeitet. Die Magnetdispersion wird anschließend mit Hilfe üblicher Beschichtungsmaschinen auf den nichtmagnetischen Träger aufgebracht. Als nichtmagnetische Träger lassen sich die üblichen Trägermaterialien verwenden, insbesondere Folien aus linearen Polyestern, wie Polyethylenterephthalat, im allgemeinen in Stärken von 4 bis 20 µm. Bevor die noch flüssige Beschichtungsmischung auf dem Träger getrocknet wird, werden die anisotropen Magnetteilchen durch die Einwirkung eines Magnetfeldes entlang der vorgesehenen Aufzeichnungsrichtung orientiert. Anschließend werden die Magnetschichten durch Hindurchführen zwischen geheizten und polierten Walzen geglättet und verdichtet. Die Dicke der Magnetschicht beträgt im allgemeinen 2 bis 10 µm.

Die Erfindung sei anhand der folgenden Beispiele näher erläutert. Zur Charakterisierung der Metallteilchen wurden die spezifische Oberfläche S_{N2} in [m²/g], gemessen nach BET gemäß DIN 66 132 mit Hilfe eines Ströhlein-Areameters der Firma Ströhlein, Düsseldorf, BRD, nach dem Einpunkt-Differenz-Verfahren nach Haul und Dümbgen, sowie die magnetischen Werte bestimmt. Diese wurden nach Vormagnetisierung in einem Impulsmagnetometer bei einem magnetischen Feld von 160 bzw. 380 kA/m gemessen, und zwar die Koerzitivfeldstärke H_{c} in [kA/m] bei einer Stopfdichte von 1,6 g/cm³ sowie die spezifische remanente Magnetisierung M_{r/ρ} und die Magnetisierung M_{m/ρ} in [nTm³/g].

Außerdem wurde noch die Schaltfeldstärkenverteilung SFD nach Williams und Comstock (AIP Conf. Proc. 5 (1971) 738) gemessen.

### Beispiel 1

In einem 10 l-Glasgefäß mit Rührer, Temperatur- und pH-Regelung und Gaseinleitungsvorrichtung für Stickstoff und Luft wurden unter Durchleiten von Stickstoff 5,5 l Wasser mit 3,2 ml konz. H₂SO₄ angesäuert und 1222 g chemisch reines FeSO₄ · 7H₂O darin gelöst. In dieser Lösung wurden zusätzlich 12,8 g ZnSO₄ · 7H₂O sowie 1,1 g NaH₂PO₄ · 2H₂O gelöst. Die Reaktionsmischung wurde auf 40°C thermostatisiert. Anschließend wurden mit einer Schlauchpumpe 1010 ml einer 15 gew.%igen NaOH-Lösung zugepumpt, entsprechend einem Ausfällgrad von 50% Fe(II). Die Gaszufuhr wird auf 400 l/h Luft umgestellt und bei 40°C die Keimbildung durchgeführt, bis der pH-Wert auf einen Wert unter 4,0 gefallen war.

Es erfolgte dann eine Zugabe von 5,1 g NaH₂PO₄ · 2H₂O zu der Reaktionsmischung. Anschließend wurde bei einem pH-Wert von 5,5 der Wachstumsprozeß durchgeführt. Zu der in diesem Prozeß benötigten NaOH werden 35 g Wasserglas (26 Gew.% SiO₂) dosiert. Nach abgeschlossener Wachstumsphase wurden weitere 27 g Wasserglas in 200 ml H₂O zugepumpt. Dabei wurde der pH-Wert bei 5,5 gehalten. Die α-FeOOH-Suspension wurde über eine Nutsche abgesaugt und gewaschen. Die Trocknung des Filterkuchens erfolgte bei 110°C im Vakuumtrockenschrank.

Das erhaltene α-FeOOH wurde im Drehkolben im Stickstoffstrom bei 800°C während 90 Minuten getempert und dann im Drehrohr bei 450°C im Verlaufe von 8 h mit Wasserstoff zum Metallpulver reduziert, das schließlich mit einem Stickstoff/Luft-Gemisch passiviert wurde.

Das auf diese Weise erhaltene magnetische Material wies folgende Eigenschaften auf (Meßfeld 160 kA/m):

| | |
|---|---|
| BET-Oberfläche: | 47 |
| H_{c}: | 107 |
| M_{r/ρ}: | 85,6 |
| M_{m/ρ}: | 120 |
| SFD: | 0,48 |

### Beispiel 2

Es wurde wie im Beispiel 1 beschrieben verfahren, jedoch die Begasungsmenge von 400 l/h Luft in der Wachstumsphase auf 200 l/h Luft reduziert.

Die Meßergebnisse waren (Meßfeld 380 kA/m):

| | |
|---|---|
| BET-Oberfläche: | 43,2 |
| H_{c}: | 102,3 |
| M_{r/ρ}: | 84,5 |
| M_{m/ρ}: | 149,2 |
| SFD: | 0,51 |

### Beispiel 3

Es wurde wie in Beispiel 2 beschrieben verfahren, jedoch die Tempertemperatur auf 750°C abgesenkt.

Die Meßergebnisse waren (Meßfeld 380 kA/m):

| | |
|---|---|
| BET-Oberfläche: | 44,3 |
| H_{c}: | 104,3 |
| M_{r/ρ}: | 85 |
| M_{m/ρ}: | 147 |
| SFD: | 0,47 |

### Beispiel 4

Es wurde wie in Beispiel 2 beschrieben verfahren, jedoch die Reduktionstemperatur auf 410°C abgesenkt.

Die Meßergebnisse waren (Meßfeld 380 kA/m):

| | |
|---|---|
| BET-Oberfläche: | 43,7 |
| H_{c}: | 102,5 |
| M_{r/ρ}: | 76,1 |
| M_{m/ρ}: | 131,9 |
| SFD: | 0,50 |

### Beispiel 5

Es wurde wie in Beispiel 1 beschrieben verfahren, jedoch die Begasungsmenge in der Wachstumsphase von 400 auf 100 l/h abgesenkt.

Die Meßergebnisse waren (Meßfeld 380 kA/m):

| | |
|---|---|
| BET-Oberfläche: | 42,7 |
| H_{c}: | 101 |
| M_{r/ρ}: | 80,4 |
| M_{m/ρ}: | 146,7 |
| SFD: | 0,53 |

### Beispiel 6

Es wurde wie in Beispiel 1 beschrieben verfahren, jedoch die Begasungsmenge in der Wachstumsphase von 400 auf 50 l/h erniedrigt.

Die Meßergebnisse waren (Meßfeld 380 kA/m):

| | |
|---|---|
| BET-Oberfläche: | 43,9 |
| H_{c}: | 100,5 |
| M_{r/ρ}: | 87,2 |
| M_{m/ρ}: | 155,6 |
| SFD: | 0,56 |

### Beispiel 7

Es wurde wie in Beispiel 1 beschrieben verfahren, jedoch der pH-Wert nach dem Wachstumsprozeß von 5,5 auf 4,0 geändert.

Die Meßergebnisse waren (Meßfeld 380 kA/m):

| | |
|---|---|
| BET-Oberfläche: | 42,6 |
| H_{c}: | 100,3 |
| M_{r/ρ}: | 85,9 |
| M_{m/ρ}: | 151,3 |
| SFD: | 0,55 |

### Beispiel 8

Es wurde wie in Beispiel 1 beschrieben verfahren, jedoch nach abgeschlossener Wachstumsphase mit NaOH der pH-Wert auf 9 eingestellt, dann 27 g Wasserglas in 200 ml Wasser zugepumpt, nachgerührt und mit verdünnter H₂SO₄ auf einen pH-Wert von 6 eingestellt und nochmals einige Zeit nachgerührt. Getempert wurde bei 800°C und bei 410°C mit Wasserstoff reduziert.

Die Meßergebnisse waren (Meßfeld 160 kA/m):

| | |
|---|---|
| BET-Oberfläche: | 48,4 |
| H_{c}: | 108,3 |
| M_{r/ρ}: | 75,0 |
| M_{m/ρ}: | 128,3 |
| SFD: | 0,51 |

### Beispiel 9

Es wurde wie in Beispiel 8 beschrieben verfahren, jedoch die Reduktionstemperatur auf 430°C erhöht.

Die Meßergebnisse waren (Meßfeld 380 kA/m):

| | |
|---|---|
| BET-Oberfläche: | 49,8 |
| H_{c}: | 103 |
| M_{r/ρ}: | 78,3 |
| M_{m/ρ}: | 135,6 |
| SFD: | 0,57 |

### Beispiel 10

In einem 250 l-Kessel mit Rührer, Temperatur- und pH-Regelung sowie einer Gaseinleitungsvorrichtung für Stickstoff und Luft wurden unter Durchleiten von Stickstoff 108 l Wasser mit 57 ml konz. H₂SO₄ angesäuert und 22 kg chemisch reines FeSO₄ · 7H₂O darin gelöst. Zu dieser Lösung wurden zusätzlich 230 g ZnSO₄ · 7H₂O und 20 g NaH₂PO₄ · 2H₂O gegeben und gelöst. Die Reaktionslösung wurde auf 40°C thermostatisiert. Anschließend wurden mit einer Pumpe 18 l einer 15 gew.%igen NaOH-Lösung zugepumpt, entsprechend einem Ausfällgrad von 50% Fe(II). Die Gaszufuhr wurde auf Luft (3700 l/h) umgestellt und bei 4°C die Keimbildung durchgeführt, bis der pH-Wert unter 4,0 gefallen war. Es erfolgte eine Zugabe von 120 g NaH₂PO₄ · 2H₂O zu der Reaktionsmischung. Anschließend wurde bei einem pH-Wert von 5,5 der Wachstumsprozeß durchgeführt. Während der gesamten Aufwachsphase wurde eine Lösung von 630 g Wasserglas in 3 l H₂O zugegeben. Nach abgeschlossener Wachstumsphase mit 15%iger NaOH auf pH = 9,0 gestellt und 486 g Wasserglas in 2 l Wasser zugegeben. Einige Zeit nachgerührt, anschließend mit verdünnter H₂SO₄ der pH-Wert auf 6 eingestellt und wiederum einige Zeit nachgerührt. Die α-FeOOH-Suspension wurde über eine Filterpresse filtriert, gewaschen und der Filterkuchen im Vakuumtrockenschrank bei 110°C getrocknet.

Das erhaltene α-FeOOH wurde in einem Drehrohrofen bei 780°C und einer Verweilzeit von 90 Minuten getempert und dann mit Wasserstoff im Drehrohrofen bei 410°C und einer Verweilzeit von 7 h zum Metall reduziert. Schließlich wurde das Metallpulver mit einem Stickstoff/Luft-Gemisch passiviert.

Das auf diese Weise erhaltene magnetische Material wies folgende Eigenschaften auf (Meßfeld 160 kA/m):

| | |
|---|---|
| BET-Oberfläche: | 45 |
| H_{c}: | 109,0 |
| M_{r/ρ}: | 87,3 |
| M_{m/ρ}: | 123,0 |
| SFD: | 0,51 |

### Beispiel 11

700 Teile eines nadelförmigen Eisenpulvers nach Beispiel 10 wurde zusammen mit 91 Teilen eines kugelförmigen Al₂O₃-Pulvers mit einem mittleren Teilchendurchmesser von 0,6 µm in 722,8 Teilen einer 13%igen Lösung eines thermoplastischen Polyesterurethans aus Adipinsäure, Butandiol-1,4 und 4,4'-Diisocyanatodiphenylmethan in einem Gemisch aus gleichen Teilen Tetrahydrofuran und Dioxan, 201,3 Teilen einer 20%igen Lösung eines Phenoxyharzes aus Bisphenol A und Epichlorhydrin mit einem mittleren Molekulargewicht von 30.000 und einem Hydroxylgruppengehalt von 6% im obengenannten Lösungsmittelgemisch sowie weiteren 264,1 Teilen dieses Lösungsmittelgemisches in einer 6.000 Volumenteile fassenden, mit 2330 Teilen Kugeln mit einem Durchmesser zwischen 1 und 1,5 mm gefüllten Rührwerksmühle unter Zusatz von 3,5 Teilen Stearinsäure und 55,4 Teilen eines Dispergierhilfsmittels auf der Basis einer Mischung eines ethoxylierten Monophosphorsäureesters und dem Salz eines Sulfobernsteinsäureethylhexylesters 32 Stunden dispergiert. Anschließend wurden 23,7 Teile Methylstearat zugeführt und nochmals 5 Stunden dispergiert. Nach Beendigung der Dispergierung wurden 46,7 Teile einer 50%igen Lösung eines Triisocyanats, gefertigt aus 3 Mol Toluylendiisocyanat und 1 Mol 1,1,1-Trimethylolpropan in Ethylacetat, hinzugefügt und weitere 15 Minuten gerührt. Nach dem Filtrieren der Dispersion wurde diese schichtförmig in einer Dicke von 5 µm auf eine Polyethylenterephthalatfolie unter gleichzeitiger Ausrichtung der Magnetpartikel mittels eines Permanentmagneten aufgetragen. Nach dem Trocknen wurde die Magnetschicht durch Hindurchführen zwischen beheizten Walzen unter Druck (90°C, Liniendruck 200 kg/cm) geglättet und die beschichtete Folienbahn in 1/2 Zoll breite Bänder geschnitten.

Die Messung der magnetischen Eigenschaften wurde in einem Meßfeld von 380 kA/m durchgeführt. Die Videoeigenschaften wurden gegen ein handelsübliches Bezugsband, Sony MP, gleich OdB auf dem Schleifenlaufwerk ermittelt. Die Meßergebnisse sind in der Tabelle angegeben.

**Tabelle**

| Luminanz | | Modulations-Rauschen [dB] | Chrominanz | |
|---|---|---|---|---|
| Signal [dB] | S/N [dB] | | Signal [dB] | S/N [dB] |
| - 3,5 | - 2,5 | + 9,4 | - 2,0 | - 1,5 |

### Vergleichsversuch 1

Es wurde wie in Beispiel 1 beschrieben verfahren, jedoch mit folgenden Abänderungen:
Nach abgeschlossener Wachstumsphase wurde der pH auf 9 eingestellt und die ganze Zeit auf diesem Wert gehalten.

Das erhaltene α-FeOOH wurde bei 780°C getempert und bei 410°C reduziert.

Die Meßergebnisse waren (Meßfeld 160 kA/m):

| | |
|---|---|
| BET-Oberfläche: | 41,0 |
| H_{c}: | 88,3 |
| M_{r/ρ}: | 62,0 |
| M_{m/ρ}: | 96,0 |
| SFD: | 0,61 |

### Vergleichsversuch 2

Es wurde wie in Vergleichsversuch 1 beschrieben verfahren, jedoch die Tempertemperatur auf 750°C erniedrigt.

Die Meßergebnisse waren (Meßfeld 160 kA/m):

| | |
|---|---|
| BET-Oberfläche: | 43,1 |
| H_{c}: | 86,0 |
| M_{r/ρ}: | 62,0 |
| M_{m/ρ}: | 98,0 |
| SFD: | 0,69 |

### Vergleichsversuch 3

Es wurde wie in Beispiel 1 beschrieben verfahren, jedoch wurde die Gesamtmenge an SiO₂ nach Abschluß der Wachstumsphase bei pH = 9 zugegeben.

Die Meßergebnisse waren (Meßfeld 380 kA/m):

| | |
|---|---|
| BET-Oberfläche: | 39 |
| H_{c}: | 90 |
| M_{r/ρ}: | 69 |
| M_{m/ρ}: | 105 |
| SFD: | 0,61 |

### Vergleichsversuch 4

Es wurde wie im Vergleichsversuch 3 beschrieben verfahren, jedoch wurden 110 g NiSO₄ · 6H₂O in 300 ml H₂O zugesetzt. Zudem wurde bei 750°C getempert und bei 410°C mit Wasserstoff reduziert.

Die Meßergebnisse waren (Meßfeld 160 kA/m):

| | |
|---|---|
| BET-Oberfläche: | 42,6 |
| H_{c}: | 105 |
| M_{r/ρ}: | 84,2 |
| M_{m/ρ}: | 117,0 |
| SFD: | 0,44 |

## Patentansprüche

1. Nadelförmige, im wesentlichen aus Eisen bestehende ferromagnetische Metallteilchen, welche eine Koerzitivfeldstärke von mehr als 100 kA/m und eine Magnetisierung von mindestens 120 nTm³/g, gemessen in einem äußeren Magnetfeld von 160 kA/m, aufweisen, wobei die Metallteilchen Silizium, aber nicht mehr als 0,4 Gew.% Nickel, bezogen auf die Gesamtmenge der Metallteilchen enthalten, dadurch gekennzeichnet, daß die Metallteilchen neben Eisen und Sauerstoff noch Zink und Phosphor enthalten.

2. Verfahren zur Herstellung der Metallteilchen gemäß Anspruch 1 durch Ausfällen von formstabilisierend ausgerüstetem α-FeOOH, Tempern dieses α-FeOOH bei 500 bis 850 °C während 30 bis 300 Minuten, Reduktion des resultierenden Materials zum Metall mittels gasförmiger Reduktionsmittel bei Temperaturen zwischen 200 und 450 °C und anschließende Passivierung des erhaltenen Materials durch kontrollierte Oxidation der Oberfläche, dadurch gekennzeichnet, daß das formstabilisierend ausgerüstete α-FeOOH dadurch erhalten wird, daß
(1)aus einer wäßrigen Eisen(II)sulfatlösung, welche mit Phosphaten und Zinksalzen zur Formstabilisierung versetzt wird, durch Zugabe einer wäßrigen Alkalihydroxidlösung und unter Durchleiten von sauerstoffhaltigen Gasen 30 bis 70 % der Eisen(II)ionen als Eisen(III)oxidhydroxid-Keime ausgefällt
(2)daran anschließend die restlichen noch in Losung befindlichen Eisen(II)ionen unter gleichmäßigem Durchleiten des sauerstoffhaltigen Gases bei einem durch Alkalihydroxidzugabe konstant gehaltenem pH-Wert von 4 bis 6 und unter Zumischung einer silikathaltigen Lösung zur Alkalihydroxidlösung in einer als SiO₂ berechneten Menge von 0,4 bis 1,8 Gew.%, bezogen auf die Menge an resultierendem FeOOH, auf die α-FeOOH-Keime aufgefällt und
(3)danach unter Konstanthalten des pH-Wertes eine weitere silikathaltige Lösung in einer als SiO₂ berechneten Menge von 0,6 bis 2,6 Gew.%, bezogen auf die Menge an resultierendem FeOOH, zugesetzt wird,
wobei die Eisen(II)sulfatlösung, die Phosphate, die Zinksalze sowie die silikathaltigen Lösungen jeweils weniger als 0,1 % Nickel enthalten.

3. Verfahren gemäß Anspruch 2, dadurch gekennzeichnet, daß vor der Zugabe der silikathaltigen Lösung gemäß Stufe 3 der pH-Wert der α-FeOOH-Suspension auf größer als 7 eingestellt und nach beendeter Zugabe auf einen Wert von kleiner als 7 abgesenkt wird.

## Claims

1. Acicular, ferromagnetic metal particles essentially consisting of iron, which have a coercive force of more than 100 ka/m and a magnetization of at least 120 nTm³/g, measured in an external magnetic field of 160 kA/m, the metal particles containing silicon but not more than 0.4% by weight, based on the total amount of the metal particles, of nickel, wherein the metal particles contain zinc and phosphorus in addition to iron and oxygen.

2. A process for the preparation of the metal particles as claimed in claim 1 by precipitating shape-stabilized α-FeOOH, heating this α-FeOOH at from 500 to 850°C for from 30 to 300 minutes, reducing the resulting material to the metal with a gaseous reducing agent at from 200 to 450°C and then passivating the material obtained by controlled oxidation of the surface, wherein the shape-stabilized α-FeOOH is obtained by a method in which
(1) from 30 to 70% of the iron(II) ions are precipitated as iron (III) oxide hydroxide nuclei from an aqueous iron(II) sulfate solution which is mixed with phosphates and zinc salts for dimensional stabilization by adding an aqueous alkali metal hydroxide solution and passing an oxygen-containing gas through the solution [sic]
(2) the remaining iron(II) ions still in solution are then precipitated onto the α-FeOOH nuclei while uniformly passing through the oxygen-containing gas at a pH of from 4 to 6, which is kept constant by adding an alkali metal hydroxide, and while mixing a silicate-containing solution with the alkali metal hydroxide solution in an amount of from 0.4 to 1.8% by weight, calculated as SiO₂ and based on the amount of resulting FeOOH, and
(3) then adding a further silicate-containing solution in an amount of from 0.6 to 2.6% by weight, calculated as SiO₂ and based on the amount of resulting FeOOH while keeping the pH constant,
the iron(II) sulfate solution, the phosphates, the zinc salts and the silicate-containing solutions in each case containing less than 0.1% of nickel.

3. A process as claimed in claim 2, wherein the pH of the α-FeOOH suspension is brought to greater than 7 before the addition of the silicate-containing solution in stage 3 and, after the end of the addition, the pH is reduced to below 7.

## Revendications

1. Particules métalliques aciculaires ferromagnétiques constituées essentiellement de fer qui ont un champ coercitif de plus de 100 kA/m, et une aimantation, mesurée dans un champ magnétique extérieur de 150 KA/m, d'au moins 120 nT.m³/g, ces particules métalliques contenant du silicium, mais pas plus de 0,4 % en poids de nickel relativement à leur quantité totale, caractérisées par le fait qu'elles contiennent, en plus de fer et d'oxygène, du zinc et du phosphore.

2. Procédé de fabrication de particules métalliques selon la revendication 1 par précipitation de FeOOH-α apprêté pour la stabilisation de sa forme, maintien de ce FeOOH-α à 500 à 850 °C pendant 30 à 300 minutes, réduction de la matière obtenue en métal au moyen de réducteurs gazeux à des températures comprises entre 200 et 450 °C et ensuite passivation de la matière obtenue par oxydation contrôlée de la surface, caractérisé par le fait que le FeOOH-α apprêté pour la stabilisation de sa forme est obtenu par
(1) précipitation, à partir d'une solution aqueuse de sulfate de fer (II) à laquelle sont mélangés des phosphates et des sels de zinc pour la stabilisation de la forme, par addition d'une solution aqueuse d'hydroxyde alcalin et avec passage de gaz contenant de l'oxygène, de 30 à 70 % des ions fer (II) en germes d'oxyde-hydroxyde de fer (III),
(2) ensuite, précipitation des ions fer (II) restants encore en solution sur les germes de FeOOH-α, avec en même temps passage du gaz
contenant de l'oxygène, à un pH de 4 à 6 maintenu constant par addition d'hydroxyde alcalin et avec addition d'une solution contenant des silicates à la solution d'hydroxyde alcalin dans une proportion calculée en SiO₂ de 0,4 à 1,8 % en poids par rapport au FeOOH obtenu, et
(3) après cela, avec maintien du pH constant, addition d'une nouvelle solution contenant des silicates dans une proportion calculée en SiO₂ de 0,6 à 2,6 % en poids par rapport au FeOOH obtenu,
la solution de sulfate de fer (II), les phosphates, les sels de zinc et les solutions contenant des silicates contenant chacun moins de 0,1 % de nickel.

3. Procédé selon la revendication 2, caractérisé par le fait qu'avant l'addition de la solution contenant des silicates de l'étape (3), on règle le pH de la suspension de FeOOH α à une valeur suspérieure à 7 et, à l'issue de cette addition, on l'abaisse à une valeur inférieure à 7.
